Europäisches Patentamt

**European Patent Office**

Office européen des brevets

(19)

(11) Publication number: **0 081 267**
**A2**

(12) # EUROPEAN PATENT APPLICATION

(21) Application number: **82201532.7**

(22) Date of filing: **01.12.82**

(51) Int. Cl.³: **B 01 J 8/12**
**//C10G49/14**

(30) Priority: **03.12.81 GB 8136506**

(43) Date of publication of application:
**15.06.83 Bulletin 83/24**

(84) Designated Contracting States:
**BE DE FR IT NL SE**

(71) Applicant: **SHELL INTERNATIONALE RESEARCH MAATSCHAPPIJ B.V.**
**Carel van Bylandtlaan 30**
**NL-2596 HR Den Haag(NL)**

(72) Inventor: **Van Veldhoven, Dirk Jan**
**Badhuisweg 3**
**NL-1031 CM Amsterdam(NL)**

(74) Representative: **Puister, Antonius Tonnis, Mr. et al,**
**P.O. Box 302**
**NL-2501 CH The Hague(NL)**

(54) **Apparatus for contacting particulate solid material with a fluid.**

(57) Apparatus for contacting particulate solid material with a fluid, comprising a column 1 having a normally vertically extending side wall 2 and provided with an inlet 5 for particulate solid material at its upper part, an outlet 6 for the particulate solid material at its lower part, an inlet 7 for fluid and an outlet 8 for the fluid, the interior of the column 1 being provided with a plurality of deflecting means 12 for deflecting a flow of the particulate solid material through the column, the deflecting means 12 being arranged one above the other and being inclined with respect to a vertical plane, and adjacent deflecting means 12 being staggered relative to one another. Passages are left free between the upper ends 13 of the deflecting means 12 and the column side wall 2 and between the lower ends 14 of the deflecting means 12 and said column side wall 2.

./...

FIG.1

# APPARATUS FOR CONTACTING PARTICULATE SOLID
# MATERIAL WITH A FLUID

The invention relates to an apparatus for contacting particulate solid material with a fluid, said apparatus comprising a column provided with an inlet for particulate solid material at its upper part, an outlet for the particulate solid material at its lower part, an inlet for fluid and an outlet for the fluid, the interior of the column being provided with a plurality of deflecting means for deflecting a flow of the particulate solid material through the column, the deflecting means being arranged one above the other and being inclined with respect to a vertical plane, adjacent deflecting means being staggered relative to one another. In columns of the above-mentioned type particulate solid material is cascaded downwardly through the column, and is thereby intensively contacted with fluid which is co-currently or countercurrently passed through the column. Columns of this type are used, for instance, for absorbing components from fluid mixtures, for the chemical conversion of fluids by solid catalysts and for the removal of absorbed volatile components from solid particles.

The deflecting means in such known columns regulate the flow of particulate solid material to effect an intensive contact with the fluid while simultaneously retarding this flow for a period sufficient to provide a retention time necessary for a specified efficiency of operation. Columns are known wherein the deflecting means are alternately arranged on either side of the axis of the column, leaving passages for solids and fluid between the lower ends of said deflecting means and the column wall. The deflecting means impart a zig-zag movement to the solid material, thereby creating an intensive contact between the solid material and fluid and a spreading of the solid material over the column. A disadvantage of columns provided with the known deflecting means is that the available space in the columns can only be partly used for the contact of solid material with fluid.

An object of the present invention is to provide an apparatus of the above-mentioned type having such an arrangement of the deflecting means that substantially the whole available space in the column can be used for the fluid/solids contact.

The apparatus for contacting particulate solid material with a fluid comprises, according to the invention, a column having a normally vertically extending side wall and provided with an inlet for particulate solid material at its upper part, an outlet for the particulate solid material at its lower part, an inlet for fluid and an outlet for the fluid, the interior of the column being provided with a plurality of deflecting means for deflecting a flow of the particulate solid material through the column, the deflecting means being arranged one above the other and being inclined with respect to a vertical plane, adjacent deflecting means being staggered relative to one another, wherein passages are left free between the upper ends of the deflecting means and the side wall of the column and between the lower ends of the deflecting means and the side wall of the column.

By the above arrangement of passages in the column, the particulate solid material and fluid can reach all spaces in the column, so that an efficient use of the column is ensured.

The invention will now be described in more detail by way of example only with reference to the accompanying drawings, wherein:

Figure 1 shows a vertical section of a column provided with deflecting means according to the invention;

Figure 2 shows cross section II-II of Figure 1;

Figure 3 shows an isometric view of the deflecting means shown in Figure 1; and

Figure 4 shows an isometric view of an alternative of the deflecting means shown in Figure 3.

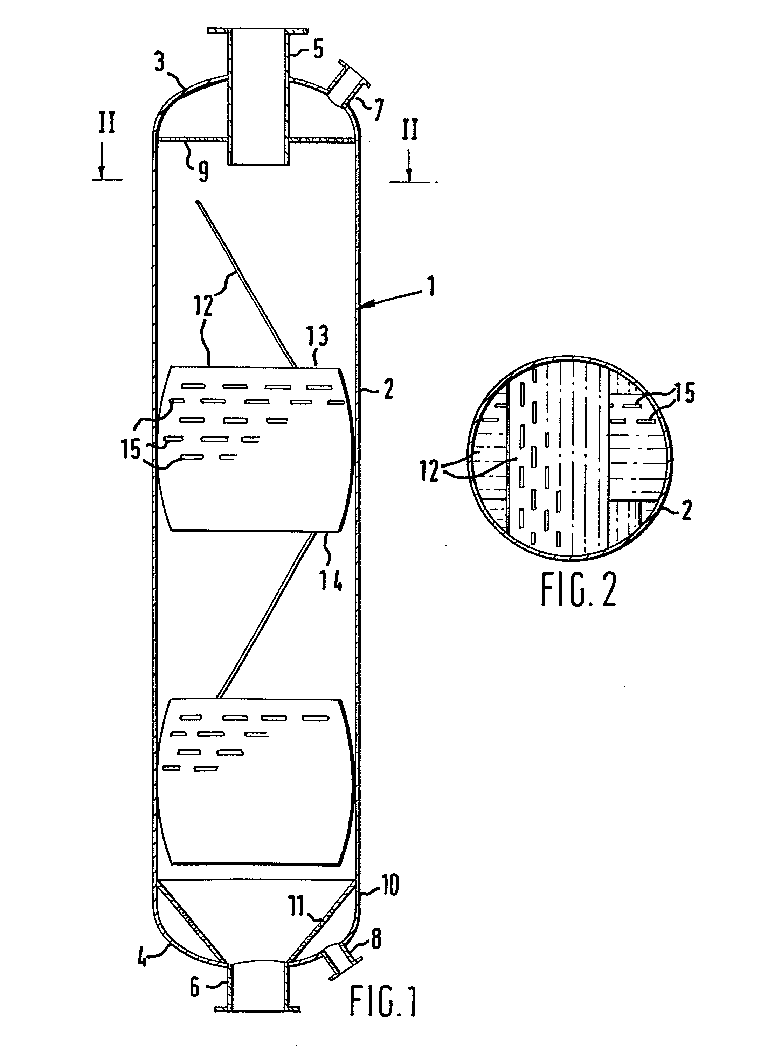

The column shown in Figure 1 and generally indicated by reference numeral 1, is formed of a tubular side wall 2, a curved top wall 3 and a curved bottom wall 4. The column which may, for example, be applied for the catalytic treatment of fluids further comprises a central inlet 5 in the top wall 3 and a central outlet 6 in the bottom wall 4 for particulate solid material.

Fluid is introduced via an inlet 7 and discharged from the column via an outlet 8.

The column 1 further comprises a perforated tray 9 for distributing the fluid over the column, said tray being arranged around the central inlet 5. In the bottom part of the column 1 a conically shaped support 10 is arranged for guiding the solids in the column towards the central outlet 6. To separate fluid from the particulate solid material, the conical support 10 is provided with a screen section 11 being impermeable to particulate solid material and permeable to fluid.

The interior of the column is further provided with downwardly inclined baffles 12, being so arranged relative to each other that there is no straight free passage from the top to the bottom of the column 1. The baffles 12 are preferably turned over 90°C with respect to adjacent ones in such a manner that the odd and even numbers of the baffles 12 are turned over 180°C with respect to each other. The baffles 12 each have a straight upper end 13 and a straight lower end 14, thereby leaving free passages for solid material and fluid between the upper end 13 and the column wall 2 and between the lower end 14 and the column wall 2. The baffles 12 are further provided with horizontal slit-shaped openings 15 for distributing fluid over the column interior. The angle of inclination of the baffles 12 should preferably correspond with the angle of repose of the solid material, i.e., the angle between the horizontal and the inclined talus of the solid material piled in the column.

When the shown column 1 is applied for the catalytic treatment of a liquid, for example for catalytic desulphurization of petroleum residues, solid catalyst is introduced into the column 1 via the central inlet 5 until substantially the whole column 1 is filled with catalyst. During the filling process the catalyst cascades downwardly via the baffles 12, resulting in a regular distribution of catalyst over the column 1.

By the presence of the passages between the upper ends 13 of the baffles 12 and the tubular side wall 2, even the spaces directly below the upper ends 13 of the baffles 12 are filled with catalyst. By choosing the angle of inclination of the baffles 12 equal to the angle of repose of the solid catalyst it is ensured that the baffles 12 will be fully embedded in the solid catalyst material. The liquid to be treated by the catalyst is introduced via inlet 7 and divided over the cross section of the column 1 by the perforated tray 9.

The liquid upon flowing downwardly through the column 1 is intensively contacted with the catalyst in the column 1 so that certain contaminations in the liquid are removed therefrom and are absorbed by the catalyst particles or adhere to the catalyst surfaces. The slit-shaped openings 15 in the baffles 12 ensure a redistribution of the liquid over the column, so that no preferential liquid flow paths extending over a substantial length of the column are formed. The treated liquid is subsequently discharged from the column 1 via the screen 11 and the fluid outlet 8. To obtain an equal distribution of liquid over each of the baffles 12, the slit-shaped openings 15 in each baffle are preferably arranged in rows, each row being staggered relative to an adjacent row.

Catalyst is continuously or intermittently withdrawn from the column 1 via the central outlet 6. During the downward movement of the catalyst the baffles 12 cause an intensive internal mixing of the catalyst particles. As a result thereof eventual hot spots between two adjacent baffles 12 in the catalyst bed which might have been formed during the liquid treatment are cooled by catalyst particles which were hardly not contacted with the liquid. Further preferential liquid flow pathes formed in the catalyst bed between adjacent baffles 12 during the liquid treatment are removed by the catalyst flow and the catalyst is equally redistributed over the column.

Reference is now made to Figure 4 showing a part of a column provided with an alternative of the deflecting means shown in Figure 1, in particular useful for relatively largesized columns. The deflecting means 20 shown in Figure 4 each consist of a plurality of substantially parallel, inclined, baffles 21 spaced apart from each other. Between the upper end of each baffle 21 and the column wall a passage for fluid and solids is arranged, as well as between the lower end of each baffle 21 and the column wall.

The distance between adjacent baffles 21 should be sufficient to allow solid material to pass downwardly between said adjacent baffles. The operation of the deflecting means shown in Figure 4 is identical to the operation of the deflecting means shown in the Figures 1 and 2.

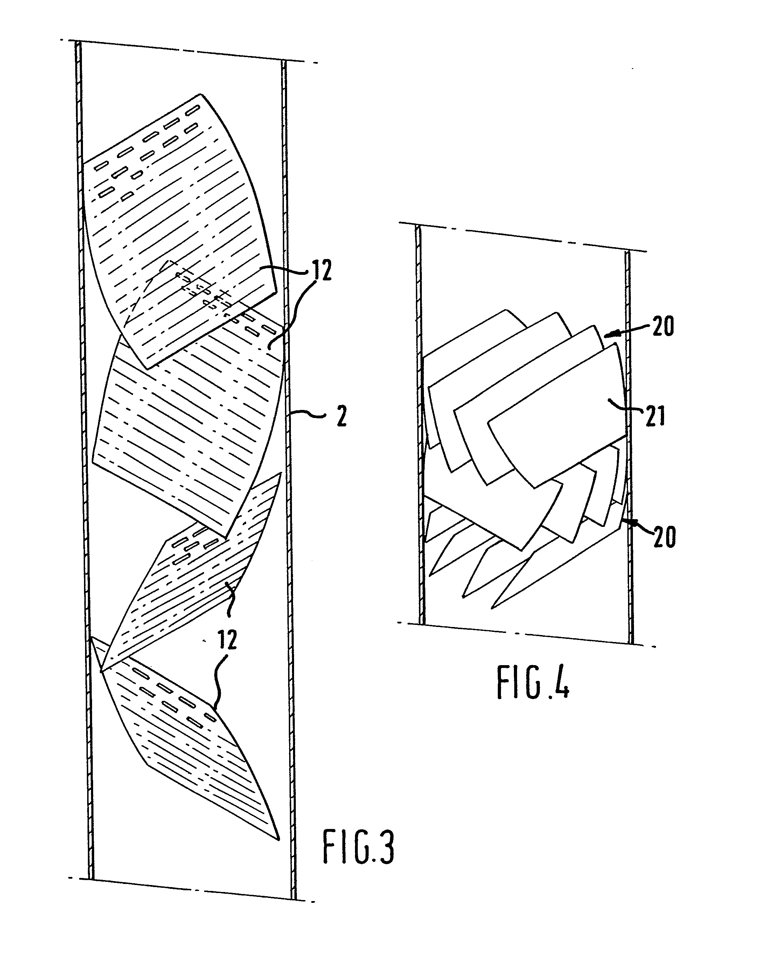

The baffles shown in Figures 1 through 3 may be formed of refractory or metallic materials, and they are supported on the inner surface of the column wall, for example, by welding the baffles to said column wall or by means of supporting rings.

Although a column has been described of the so-called cocurrent type it will be understood that the column may also be of the so-called countercurrent type without departing from the present invention. In such a column of the countercurrent type the inlet for fluid is arranged at the lower part of the column and the outlet for fluid is arranged at the upper part of the column. Such type of column may for example be used for stripping catalyst withdrawn from a column shown in Figure 1.

Although the baffles shown in the drawings are flat-shaped, it is noted that also baffles being slightly curved may be applied.

In the embodiment shown in Figure 4 redistribution of liquid over the column cross section is obtained by the passages between adjacent parallel baffles. It will be understood that these baffles may be further provided with openings as shown in Figure 1 to obtain a further redistribution of the fluid treated in the column.

Instead of the slit-shaped openings 15 in the baffles 12, any other shape of openings can be applied, such as a circular shape.

To have a full advantage of the openings in the baffles 12, the openings are preferably equally distributed over the baffle surface. To avoid that fluid can pass via a straight line through the openings 15 in the successive baffles 12, the openings in adjacent baffles 12 should be in a staggered position relative to one another. It should be noted that in small-sized columns the openings in the baffles are not strictly necessary. It will be understood that the baffles may be provided with quenching means for cooling the interior of the column. The quenching means may suitably be arranged at the lower surfaces of the baffles. Preferably the quenching means if applied are equally distributed over the baffle surfaces.

C L A I M S

1.  Apparatus for contacting particulate solid material with a fluid characterized in that it comprises a column having a normally vertically extending side wall and provided with an inlet for particulate solid material at its upper part, an outlet for the particulate solid material at its lower part, an inlet for fluid and an outlet for the fluid, the interior of the column being provided with a plurality of deflecting means for deflecting a flow of the particulate solid material through the column, the deflecting means being arranged one above the other and being inclined with respect to a vertical plane, adjacent deflecting means being staggered relative to one another, wherein passages are left free between the upper ends of the deflecting means and the side wall of the column and between the lower ends of the deflecting means and the side wall of the column.

2.  Apparatus as claimed in claim 1, characterized in that the deflecting means are provided with openings.

3.  Apparatus as claimed in claim 2, characterized in that the openings are arranged in rows, each row being staggered relative to an adjacent row.

4.  Apparatus as claimed in claim 3, characterized in that the rows are substantially horizontally arranged.

5.  Apparatus as claimed in any one of the claims 1-4, characterized in that the deflecting means have substantially straight horizontally arranged upper and lower ends.

6.  Apparatus as claimed in any one of the claims 1-5, characterized in that the deflecting means each consists of a single baffle.

7.  Apparatus as claimed in any one of the claims 1-6, characterized in that the deflecting means each consists of a plurality of baffles substantially parallel arranged with respect to each other.

8.   Apparatus as claimed in any one of the claims 1-7, characterized in that the angle of inclination of the deflecting means is substantially equal to the angle or repose of particulate solid material in the column.

9.   Apparatus as claimed in any one of the claims 1-8, characterized in that adjacent deflecting means are turned over 90 degrees with respect to each other.

10.   Apparatus as claimed in claim 9, characterized in that the odd and even numbers of the consecutive deflecting means are turned over 180 degrees with respect to each other.

ADRH04

0081267

FIG.1

FIG.2

12

2

12

FIG.3

20

21

20

FIG.4